# EUROPÄISCHE PATENTSCHRIFT

(11) **EP 0 745 198 B1**
(45) Veröffentlichungstag und Bekanntmachung des Hinweises auf die Patenterteilung: **12.08.1998**
(21) Anmeldenummer: 95907658.9
(22) Anmeldetag: 09.02.1995
(51) Int. Cl.: F16H 47/04

(54) **LASTSCHALTGETRIEBE, INSBESONDERE FÜR MOBILE BAU- UND ARBEITSMASCHINEN, SOWIE VERFAHREN ZUR STEUERUNG EINES LASTSCHALTGETRIEBES**
POWER SHIFT GEAR, IN PARTICULAR FOR MOBILE BUILDING AND WORKING MACHINES, AND POWER SHIFT GEAR CONTROL PROCESS
BOITE DE VITESSE, NOTAMMENT POUR MACHINES DE CHANTIER ET DE TRAVAIL MOBILES, ET PROCEDE DE COMMANDE DE BOITES DE VITESSE

(30) Priorität: 16.02.1994 DE 4404829
(43) Veröffentlichungstag der Anmeldung: 04.12.1996
(73) Patentinhaber: Tolksdorf, Detlef, 45141 Essen (DE); Pidde, Gerd, 44879 Bochum (DE)
(72) Erfinder: Tolksdorf, Detlef, 45141 Essen (DE); Pidde, Gerd, 44879 Bochum (DE)
(86) Internationale Anmeldenummer: EP9500470
(87) Internationale Veröffentlichungsnummer: WO9522704

(56) Entgegenhaltungen:
- EP-A- 0 059 055
- EP-A- 0 460 584
- DE-A- 1 918 954
- DE-A- 3 907 633
- DE-U- 9 208 554
- US-A- 3 596 535
- US-A- 3 748 924
- PERIODICA POLYTECHNICA, - 30.September 1959 A.JUREK 'the description of the "jupiter" hydromechanical continuously variable speed transmission'

## Beschreibung

Die Erfindung betrifft ein Lastschaltgetriebe, insbesondere für mobile Bau- und Arbeitsmaschinen gemäß gattungsbildendem Teil des ersten Patentanspruches.

Der DE-C 39 07 633 ist ein gattungsgemäßer stufenlos regelbarer hydrostatischer Fahrantrieb mit mindestens einem über ein Vorgelege bestimmter Übersetzung fest mit dem gemeinsamen Ausgang verbundener Konstantmotor sowie mindestens einem bis in eine Nullstellung rückschwenkbarer Verstellmotor bekannt, wobei zwischen Verstellmotor und Ausgang eine Schaltkupplung angeordnet ist. Der Verstellmotor weist eine größere Übersetzung seines Vorgeleges zum Ausgang auf als der fest mit dem Ausgang verbundene Konstantmotor. Alternativ dazu können in hydraulischer Parallelschaltung ein erster bis in Nullstellung und mindestens ein zweiter rückschwenkbarer Motor vorgesehen werden.

Nach Erreichen der Grenzstellung des Verstellmotors wird dieser mit schnellem Übergang auf den Verstellwinkel alpha = 0 oder mindestens in den Bereich der Selbsthemmung geführt und im Verlauf dieses Vorganges durch eine Schaltkupplung vom Ausgang abgetrennt, wobei gleichzeitig der Ausschwenkwinkel der Fahrantriebspumpe um den Betrag zurückgenommen wird, der dem letztlichen Hubvolumen des Verstellmotors entsprach. Der Ausschwenkwinkel der Fahrantriebspumpe wird nun wieder zunehmend auf den vollen Ausschwenkwinkel geführt, wobei dann die Endgeschwindigkeit mit dem noch in Betrieb befindlichen Konstantmotor erreicht wird. Bei Verringerung der Geschwindigkeit werden die vorstehend beschriebenen Schritte und Vorgänge umgekehrt durchlaufen, wobei ab einem bestimmten Zugkraftbedarf im unteren Geschwindigkeitsbereich die Schaltkupplung dann wieder geschlossen und im Verlauf dieses Vorganges der Verstellmotor emeut zum Einsatz gebracht wird. Der Nachteil dieses St.d.T. liegt im wesentlichen darin, daß bei zwei Antrieben der eine in der Betriebsphase vollständig abgekoppelt wird und demzufolge für eine mögliche Leistungserhöhung nicht mehr eingesetzt werden kann.

Durch die EP-A 137 406 ist eine Vorrichtung zum regelbaren Antrieb großer Massen, insbesondere zum Antrieb der Räder von Fahrzeugen mit sehr großer Nutzlast, zum Antrieb von Werkzeugmaschinen, Fördereinrichtungen oder dgl., bekannt. Die Vorrichtung ist gekennzeichnet durch ein zumindest einstufiges, einer Kraftquelle zugeordnetes Planeten- bzw. Umlaufgetriebe mit wenigstens zwei Antriebswellen, die jeweils mit einem hydrostatischen Antriebsmotor verbunden sind, sowie mit einer Einrichtung zur - insbesondere stufenlosen - Regelung der Drehzahl zumindest eines der hydrostatischen Antriebsmotoren, wobei vorzugsweise eine der beiden Antriebswellen direkt mit dem Sonnenrad des Planeten- bzw. Umlaufgetriebes und die andere der Antriebswellen mit dem drehbar gelagerten Hohlradkranz des Planeten-bzw. Umlaufgetriebes gekuppelt sind und der Planetenradträger des Planeten- bzw. Umlaufgetriebes mit einer Antriebswelle antriebsmäßig gekoppelt ist. Eine der Antriebswellen bzw. ein damit antriebsseitig gekoppeltes Teil, insbesondere der Hohlradkranz eines Planetengetriebes, ist mittels einer Lamellenbremse stillsetzbar. Die Pumpen sind vorzugsweise über ihren vollen Schwenkwinkel verstellbar und damit die von diesen Pumpen gespeisten Motoren in beiden Richtungen antreibbar sowie bei Nullhub der jeweiligen Pumpe stillsetzbar und durch die Lamellenbremse sicherbar.

Die EP-A 137 406 bietet die Möglichkeit, hohe Ausgangsdrehzahlen einzustellen, weil durch das Prinzip des Überlagerungsgetriebes die Eingangsdrehzahlen beider Hydromotore mechanisch addiert werden können. Das Dremomentenvermögen des Getriebes ist hierbei allerdings maximal so hoch, wie das kleinere Drehmomentenvermögen der beiden Antriebseinheiten unter Berücksichtigung der mechanischen Übersetzung zwischen den Antriebswellen. Dieser Sachverhalt beruht darauf, daß die Motoren sich mechanisch aufeinander abstützen und das entsprechende Drehmoment auf die Abtriebswelle geleitet wird, welches unter Berücksichtigung der mechanischen Übersetzung kleiner sein muß als das Drehmomentenvermögen der beiden Motoren. Überschreitet das Drehmoment der Abtriebswelle unter Berücksichtigung der mechanischen Übersetzungen mit welchen die jeweiligen Motore auf die Abtriebswelle untersetzt sind das Drehmomentenvermögen einer der beiden Motoren, so wird der entsprechende Motor mechanisch angetrieben. In diesem Fall spricht man bei Überlagerungsgetrieben von Blindleistung. Zur Verhinderung dieses rückwärtigen Antreibens durch die Abtriebswelle bzw. zur Ermöglichung hoher Drehmomente läßt sich die Lamellenbremse betätigen, so daß der nicht gebremste Motor sich mechanisch auf die Bremse abstützt und der andere Motor festgesetzt wird. Nachteilig bei diesem St.d.T. ist festzustellen, daß ein Antrieb in einer Betriebsphase komplett stillgelegt wird und deswegen in dieser Betriebsphase für weitere Antriebsleistungen nicht mehr zur Verfügung steht.

Ziel des Erfindungsgegenstandes ist es, ein hydrostatisches Lastschaltgetriebe, insbesondere für mobile Bau- und Arbeitsmaschinen, wie Radlader, Mobilbagger, Grader, Autokrane oder dgl., zu schaffen, wobei, um höhere Drehzahlbereiche zu erreichen, die Addition der beiden Hydromotordrehzahlen zu realisieren ist, ohne das im unteren Drehzahlbereich gegebene hohe Drehmoment zu vermindern.

Dieses Ziel wird mit den Merkmalen der unabhängigen Patentansprüchen 1 und 19 erreicht.

Vorteilhafte Weiterbildungen des Erfindungsgegenstandes sind den gegenständlichen Unteransprüchen zu entnehmen.

Wie in den gegenständlichen Ansprüchen dargelegt, kann das erfindungsgemäße Lastschaltgetriebe wahlweise mit Hydromotore in geschlossenem bzw. offenen und geschlossenen Kreisläufen betrieben werden.

Das aus einem offenen und einem geschlossenen hydrostatischen Kreislauf gebildete Antriebskonzept mit einer oder mehreren Pumpen kann beispielsweise bei kleineren und mittleren Bau- und Arbeitsmaschinen, wie z.B. einem Radlader mit Dienstgewichten entsprechend der Masse kleiner/gleich 12 t zum Einsatz gelangen. Mindestens zwei geschlossene hydrostatische Kreisläufe mit zugehörigen Pumpen werden für gewichtsmäßig darüber hinausgehende Bau-und Arbeitsmaschinen als zweckmäßig angesehen. Die Auswahl ist hierbei auslegungsbedingt und von der Art der Bau- und Arbeitsmaschine abhängig.

Bau- und Arbeitsmaschinen unterscheiden sich grundsätzlich in ihrer Betriebsweise, und zwar im Hinblick auf den dynamischen Fahrzustand. So weist z.B. ein Radlader einen wesentlich höheren dynamischen Fahrzustand auf als beispielsweise ein Autokran. Mit den in den Patentansprüchen dargelegten Merkmalen wird ein auf diesem Gebiet tätiger Fachmann in die Lage versetzt, sämtlichen Kriterien unterschiedlicher dynamischer Fahrzustände gerecht zu werden.

Erfindungsgemäß wird weiterhin ein Verfahren zur Steuerung eines Lastschaltgetriebes vorgeschlagen, mit mindestens zwei über mindestens eine Pumpe antreibbare, eingangswellenseitig jeweils mit mindestens einer Zahnradpaarung in Wirkverbindung stehende Hydromotore, die über eine Kupplung miteinander verbunden sind, und mindestens einem, mindestens eine Abtriebswelle beinhaltenden Planetengetriebe, dessen Hohlrad über mindestens eine Bremse festsetzbar ist, indem die Hydromotore in einem unteren Geschwindigkeitsbereich (Fahrbereich I) drehmomentaddierend zusammengeschaltet werden und einer der Hydromotore dergestalt über eine weitere Kupplung umgeschaltet wird, daß die Hydromotore in einem oberen Geschwindigkeitsbereich (Fahrbereich II) drehzahladdierend betrieben werden.

Vorteilhafte Weiterbildungen des Verfahrens sind den zugehörigen Unteransprüchen zu entnehmen.

Somit wird zu Beginn des ersten Fahrbereiches eine Addition der Drehmomente der Hydromotore dadurch herbeigeführt, daß beide Eingangswellen des Lastschaltgetriebes über eine Kupplung und Zahnradpaarung kraft- bzw. formschlüssig miteinander verbunden sind. Das Hohlrad des Planetengetriebes wird hierbei über eine Bremse festgesetzt. Die stufenlose Drehzahlerhöhung wird nun dadurch erreicht, daß die Hydropumpen aus- und die Hydromotore eingeschwenkt werden. Spätestens bei Erreichen der maximalen Drehzahl wird einer der beiden Hydromotore über eine Kupplung von der Antriebswelle des anderen Hydromotors entkuppelt und auf die Drehzahl n = 0 U/min gesteuert. Über die weitere Kupplung wird dieser freigeschaltete Hydromotor kraftschlüssig auf das Hohlrad des Planetengetriebes geschaltet und anschließend die Bremse gelöst, welche des Hohlrad festgesetzt hält. Dieser zweite Hydromotor wird anschließend in seiner Drehzahl stufenlos erhöht und zwar durch entsprechendes Ausschwenken der Hydropumpe und Verringerung seines Fördervolumens. Die Drehzahlen beider Hydromotore werden hierbei entsprechend dem Überlagerungsgetriebeprinzip mechanisch addiert.

Die Reduzierung der Drehzahl wird dadurch erreicht, daß zunächst die überlagerte Drehzahl stufenlos reduziert wird, und zwar durch Vergrößerung des Fördervolumens des zweiten Hydromotors und durch entsprechendes Einschwenken der zugehörigen Hydropumpe. Ist die Drehzahl n = 0 U/min dieses zweiten Hydromotors erreicht, wird die Haltebremse des Hohlrades wieder aktiviert und die Kupplung gelöst, welche den Kraftschluß zwischen dem zweiten Hydromotor und dem Hohlrad bewirkt. Anschließend wird die Drehzahl des zweiten Hydromotors erhöht und die Kupplung aktiviert, welche die beiden auf den Eingangswellen vorgesehenen Zahnradpaarungen wieder kraftschlüssig dergestalt miteinander verbindet, daß die Drehmomente beider Hydromotore wieder addiert werden.

Insbesondere Bau- und Arbeitsmaschinen arbeiten im Bereich einer Zugkraft-/Geschwindigkeits-Hyperbel, welche in allen Betriebspunkten der maximal installierten Leistung entspricht, und zwar unter Berücksichtigung der entsprechenden Wirkungsgrade. Da im unteren Geschwindigkeitsbereich das Zugkraftvermögen groß bzw. mit Sicht auf das Getriebe im unteren Drehzahlbereich das Drehmomentvermögen hoch sein muß, wird im unteren Drehzahlbereich die Schaltung zur Addition der Drehmomente betrieben. Mit steigender Drehzahl bzw. Geschwindigkeit nimmt das zu übertragende Drehmoment überproportional ab. Bei Erreichen des Drehmomentbereiches, welcher dem Drehmomentvermögen des ersten Hydromotors entspricht, kann wahlweise der zweite Hydromotor auf Umlauf geschaltet werden und die Erhöhung der Drehzahl mit dem ersten Hydromotor erfolgen oder es können beide Motoren gemeinsam beschleunigen. Diese Entscheidung kann im Hinblick auf eine Optimierung des Gesamtwirkungsgrades getroffen werden, z.B. ausgehend davon, daß bei zwei treibenden Motoren der Betriebsdruck der einzelnen Motoren reduziert wird, relativ zu nur einem treibenden Motor, oder der Schwenkwinkel der Motoren groß gewählt werden kann, um den Wirkungsgrad so zu optimieren. Wird die Grenzdrehzahl eines oder beider Hydromotore erreicht, so wird zur Erhöhung der Drehzahl die Umschaltung auf die Addition der Drehzahlen durchgeführt.

Bei dem erfindungsgemäßen Lastschaltgetriebe können die hydrostatischen Motore im geschlossenen und/oder im offenen hydraulischen Kreislauf betrieben werden, wobei in letzterem bevorzugtem Fall die für die Arbeitshydraulik der Bau- und Arbeitsmaschine zum Einsatz gelangende Arbeitspumpe, vorzugsweise den umschaltbaren Hydraulikmotor mit Druckmedium (Hydrauliköl) beaufschlagt. Diese Maßnahme bietet gegenüber dem geschlossenen Kreislauf den Vorteil, daß eine ohnehin vorhandene und nicht ständig im Einsatz befindliche Pumpe verwendet wird und somit keine zusätzliche, nur für diesen Zweck vorgesehene Pumpe, in den Kreislauf integriert werden muß. Der umschaltbare Hydraulikmotor wird einem weiteren Gedanken der Erfindung gemäß als Konstantmotor ausgebildet.

Bei Verwendung der für die Arbeitshydraulik der Bau- und Arbeitsmaschine zum Einsatz gelangenden Arbeitspumpe zur Ansteuerung des Hydraulikmotors kann der für die Arbeitshydraulik ohnehin ebenfalls vorhandene, aus mehreren Einzelventilen gebildete Steuerblock in einfacher Weise um eine weitere Funktionseinheit erweitert werden.

Die Erfindung ist anhand eines Ausführungsbeispieles in der Zeichnung dargestellt und wird wie folgt beschrieben. Es zeigen:
- Figur 1 -: Prinzipskizze des erfindungsgemäßen Lastschaltgetriebes in einem ersten Fahrbereich geringerer Geschwindigkeit
- Figur 2 -: Prinzipskizze des erfindungsgemäßen Lastschaltgetriebes in einem zweiten Fahrbereich höherer Geschwindigkeit
- Figur 3 -: Leistungshyperbel für das erfindungsgemäße Lastschaltgetriebe gemäß den Figuren 1 und 2.

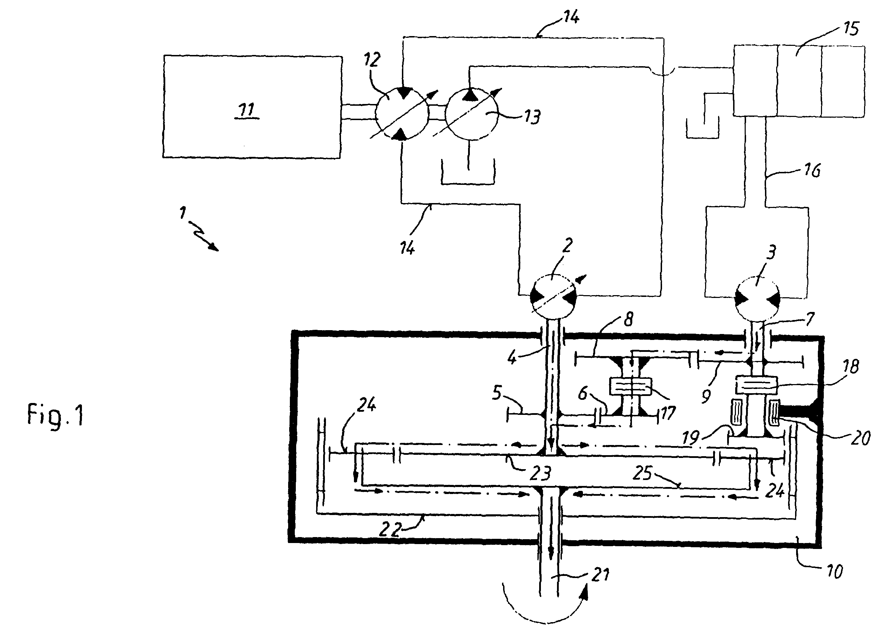

Figur 1 zeigt eine mögliche Variante des erfindungsgemäßen Lastschaltgetriebes 1, wie es beispielsweise in einem Radlader mit einem Dienstgewicht entsprechend einer Masse von m = 7,5 t eingesetzt werden könnte, das im wesentlichen aus folgenden Komponenten besteht: zwei Hydromotore 2,3, von denen der eine Hydromotor 2 als Verstellmotor und der andere Hydromotor 3 als Konstantmotor ausgebildet ist, einer ersten mit der Antriebswelle 4 des Hydromotors 2 verbundenen Zahnradpaarung 5,6, einer zweiten mit der Antriebswelle 7 des Hydromotors 3 verbundenen Zahnradpaarung 8,9 sowie einem diesen nachgeschalteten Planetengetriebe 10. über einen Dieselmotor 11 wird einerseits eine Fahrpumpe 12 und andererseits eine für die hier nicht weiter dargestellte Baumaschine zum Einsatz gelangende Arbeitspumpe 13 angetrieben. Die Fahrpumpe 12 betreibt den Verstellmotor 2 in geschlossenem Kreislauf 14, während die Arbeitspumpe 13 den Konstantmotor 3 über den Steuerblock 15 in einem offenen hydraulischen Kreislauf 16 mit Hydrauliköl versorgt.

Alternativ ist natürlich auch denkbar, anstelle der Arbeitspumpe 13 eine weitere Fahrpumpe 12 vorzusehen, die dann ebenfalls den ihr zugeordneten Hydromotor 3 in geschlossenem Kreislauf betreiben könnte. Die Auswahl von Pumpen und Hydromotore sollte in jedem Fall vom speziellen Anwendungsfall abhängig gemacht werden.

Die Zahnradpaarungen 5/6 und 8/9 sind über eine vorzugsweise hydraulisch betätigbare Kupplung 17 miteinander verbunden. Im Bereich der Antriebswelle 7 ist in diesem Beispiel hinter dem Zahnrad 9 eine weitere, ebenfalls hydraulisch betätigbare Kupplung 18 vorgesehen, während die Antriebswelle 7 durch ein weiteres Zahnrad 19 abgeschlossen wird. Zwischen der Kupplung 18 und dem Zahnrad 19 ist eine Lamellenbremse 20 angeordnet.

Das in Figur 1 dargestellte Lastschaltgetriebe soll den Fahrbereich I des Radladers widerspiegeln. Der Leistungsfluß in diesem Fahrbereich ist durch die eingefügten Pfeile erkennbar. Der Hydromotor 2 treibt hierbei über seine Antriebswelle 4 unmittelbar das Sonnenrad 23 des Planetengetriebes 10 an. Über die Planeten 24 wird das Drehmoment des Hydromotors 2 auf den Steg 25 des Planetengetriebes 10 und somit auf die damit verbundene, in diesem Beispiel einzige Abtriebswelle 21 übertragen. Der Hydromotor 3 treibt über seine Antriebswelle 7, die Zahnradpaarung 8/9 und über die in diesem Zustand geschlossene, d.h. aktivierte Kupplung 17 die auf die Antriebswelle 4 des Hydromotors 2 einwirkende Zahnradpaarung 5/6. In Abhängigkeit vorgegebener auslegungsbedingter Parameter der Hydromotore 2,3 ist zwischen den Antriebswellen 4 und 7 ein entsprechendes Untersetzungsverhältnis gegeben. Die Drehmomente der beiden Hydromotore 2,3 werden somit im Bereich der Antriebswelle 4 addiert und wie dargestellt auf die Abtriebswelle 21 des Planetengetriebes 10 übertragen. Das Hohlrad 22 ist hierbei über die Bremse 20 festgesetzt und die Kupplung 18 ist entkuppelt, d.h. sie ist inaktiv.

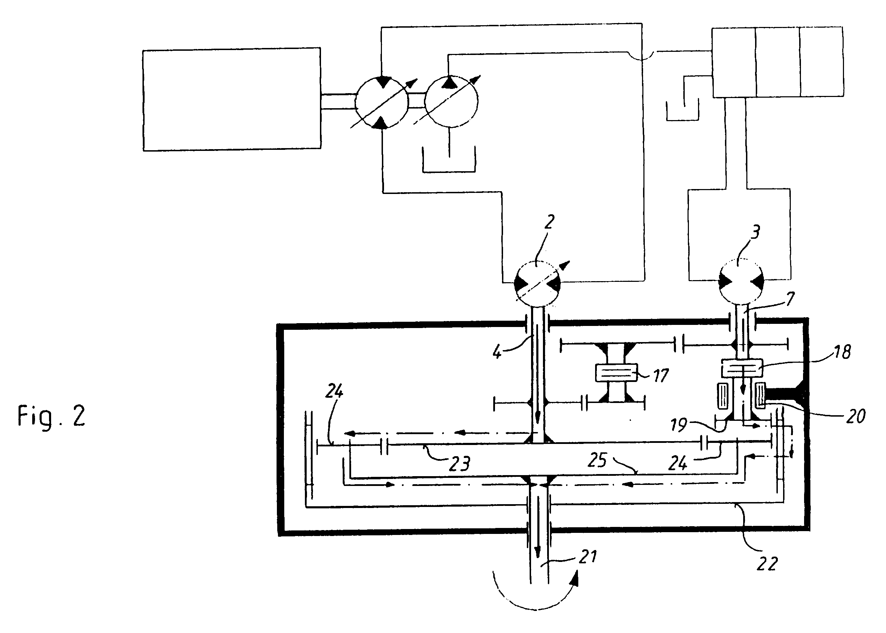

Figur 2 zeigt das gleiche Lastschaltgetriebe 1, wie es in Figur 1 dargestellt ist, so daß gleiche Bezugszeichen gelten. Hier soll jetzt der Fahrbereich II des Radladers erläutert werden. Analog zu Figur 1 ist auch in Figur 2 der Leistungsfluß für diesen Fahrbereich mit Pfeilen markiert. Die Drehzahl des Hydromotors 2 wird von der Antriebswelle 4 unmittelbar über das Sonnenrad 23 und die Planeten 24 auf den Steg 25 und somit auf die Abtriebswelle 21 übertragen. Die Drehzahl des Hydromotors 3 wird - da die Kupplung 17 nun inaktiv, d.h. entkuppelt, die Kupplung 18 aktiv, d.h. eingekuppelt und die Bremse 20 gelöst ist - über das Zahnrad 19 auf das Hohlrad 22 übertragen und somit der Drehzahl des Hydromotors 2 überlagert. Über die Planeten 24 wird die Drehzahl auf den Steg 25 und somit auf die Abtriebswelle 21 übertragen.

Es wird somit ein Lastschaltgetriebe 1 vorgeschlagen, welches in diesem Beispiel in seiner ersten Geschwindigkeitsphase (Fahrbereich I) von beiden Hydromotoren 2,3 angetrieben wird, wobei die von den Hydromotoren 2,3 abgegebenen Drehmomente durch die Zahnradpaarungen 5/6 sowie 8/9 über die Kupplung 17 zu einem Gesamtdrehmoment addiert werden. Das Gesamtdrehmoment wird über das Planetengetriebe 10 auf die Ausgangswelle 21 des Lastschaltgetriebes 1 geleitet. Die Übersetzungen der Zahnradpaarungen 5/6 bzw. 8/9 werden vorzugsweise dergestalt gewählt, daß beide Hydromotore 2,3 bezüglich ihrer Maximaldrehzahl bis zur Endphase des ersten Geschwindigkeitsbereiches voll ausgenutzt werden können, so daß deren Leistungsvermögen auch in der ersten Geschwindigkeitsphase im Gegensatz zum St.d.T. ausgenutzt wird. In der zweiten Geschwindigkeitsphase (Fahrbereich II) wird der Hydromotor 3 abweichend vom St.d.T. nicht abgeschaltet sondern umgeschaltet, indem die Kupplung 17 gelöst, die Kupplung 18 aktiviert und die Bremse 20 anschließend gelöst wird. In dieser Phase wirkt das System als Überlagerungsgetriebe. Die vom Hydromotor 3 eingeleitete Drehzahl wird über das Zahnrad 19 auf das Hohlrad 22 des Planetengetriebes 10 geleitet und der eingeleiteten Drehzahl des Hydromotors 2 überlagert bzw. mechanisch aufaddiert, wodurch sich eine hohe Ausgangsdrehzahl und demzufolge eine hohe Geschwindigkeit im Fahrbereich II ergibt. Der Vorteil gegenüber dem St.d.T. ist darin zu sehen, daß der Hydromotor 3 in der ersten Geschwindigkeitsphase nicht abgeschaltet und nutzlos ist sondern in beiden Fahrbereichen I und II antreibt und zwar im Fahrbereich I mit seinem Drehmoment das Gesamtdrehmoment erhöht bzw. die Zugkraft des nicht weiter dargestellten Fahrzeuges steigert und im Fahrbereich II mit seiner Drehzahl die Gesamtdrehzahl bzw. die Geschwindigkeit des Fahrzeuges steigert.

Im folgenden wird ausgehend von den Figuren 1 und 2 eine Schaltstrategie zum erfindungsgemäßen Lastschaltgetriebe 1 wiedergegeben:
A) Anfahren aus dem Stillstand
   Ausgangszustand: die Fahrpumpe 12 ist eingeschwenkt; die Hydromotore 2 und 3 sind voll ausgeschwenkt; der Hydromotor 3 ist über den Steuerblock 15 auf Umlauf geschaltet; die Kupplung 17 und die Bremse 20 sind aktiviert; die Kupplung 18 ist gelöst.
   - die Fahrpumpe 12 wird stetig ausgelenkt und der Hydromotor 2 beschleunigt. Ist hierbei sein Druck größer als 70 % und die Geschwindigkeit der Bau- und Arbeitsmaschine kleiner als 20 % der Maximalgeschwindigkeit, wird über den Steuerblock 15 der Hydromotor 3 zugeschaltet,
   - die Drehmomente der Hydromotoren 2 und 3 werden über die Kupplung 17 addiert,
   - es wird solange mit beiden Hydromotoren 2,3 gleichzeitig beschleunigt, bis ca. 20 % der maximalen Geschwindigkeit erreicht werden (entspricht einem Zugkraftvermögen kleiner 50 %),
   - der Hydromotor 3 wird über den Steuerblock 15 auf Umlauf geschaltet (der Hydromotor 2 kann das maximale Zugkraftvermögen nunmehr allein übertragen),
   - bei weiterer Geschwindigkeitszunahme wird die Kupplung 17 geöffnet und im Anschluß daran die Kupplung 18 aktiviert,
   - vor Erreichen der Maximaldrehzahl des Hydromotors 2 wird der Hydromotor 3 über den Steuerblock 15 mit Druck beaufschlagt,
   - bei Erreichen der Maximaldrehzahl des Hydromotors 2 wird die Bremse 20 gelöst und das Hohlrad 22 über den Hydromotor 3 solange weiter beschleunigt, bis die maximale Ausgangsdrehzahl des Planetengetriebes 10 (Überlagerungsgetriebe) erreicht ist.
B) Bremsablauf aus hoher Geschwindigkeit
   - die Drehzahl des Hydromotors 3 wird über den Steuerblock 15 bis auf Null reduziert,
   - die Bremse 20 wird aktiviert,
   - der Hydromotor 3 wird über den Steuerblock 15 auf Umlauf geschaltet,
   - die Kupplung 18 wird geöffnet und im Anschluß daran die Kupplung 17 aktiviert,
   - der Hydromotor 2 wirkt allein auf die Abtriebswelle 21,
   - bei Erreichen einer Geschwindigkeit kleiner als 20 % wird der Hydromotor 3 über den Steuerblock 15 auf Druck geschaltet, wenn gleichzeitig der Druck am Hydromotor 2 größer als 70 % ist, d.h. wenn der Zugkraftbedarf größer als 50 % ist.

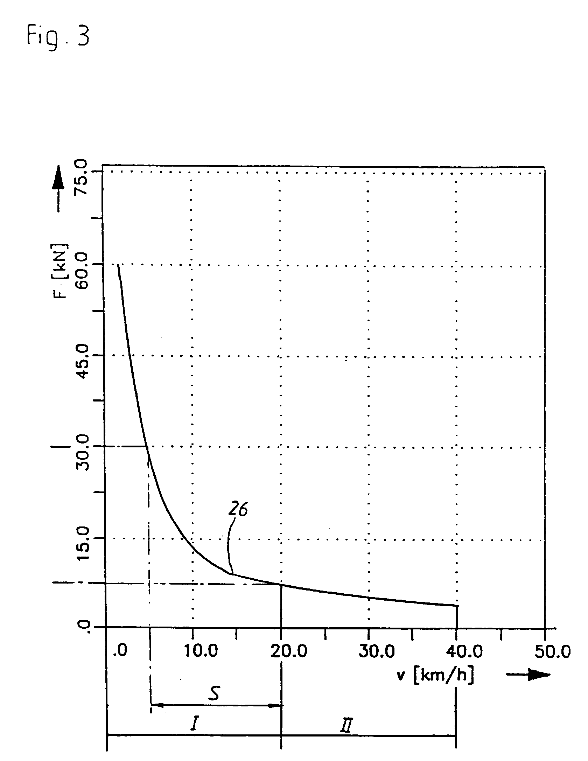

In Figur 3 ist die Leistungshyperbel 26 des Lastschaltgetriebes 1 gemäß den Figuren 1 und 2 dargestellt. Auf der Abszisse ist die Geschwindigkeit v in km/h und auf der Ordinate die Zugkraft F in kN angegeben. Erkennbar ist, daß der Zugkraftbedarf bei niedriger Geschwindigkeit hoch ist und sich bei höherer Geschwindigkeit stark verringert, da mit steigender Drehzahl bzw. Geschwindigkeit das zu übertragende Drehmoment überproportional abnimmt. Das Schaltbild geht aus von einer Fahrleistung des Radladers von etwa P = 42 kW, wobei die maximale Zugkraft F = 60 kN und die maximale Fahrgeschwindigkeit v = 40 km/h betragen sollen. Dargestellt sind zwei Geschwindigkeitsbereiche (Fahrbereiche I und II), wobei Fahrbereich I kleiner 20 km/h ist und Fahrbereich II zwischen v = 20 km/h und v = 40 km/h liegt . Der Schaltbereich S liegt hierbei zwischen v = 5 km/h und v = 20 km/h, so daß ein großer Geschwindigkeitsbereich für die Schaltphase vorhanden ist und Beschädigungen an Hydraulikmotore und/oder Pumpen somit sicher vermieden werden können. Es ist erkennbar, daß der Zugkraftbedarf bereits bei einer Geschwindigkeit von v = 5 km/h auf etwa die Hälfte seines Anfahrwertes abgesunken ist, wobei ein verhältnismäßig großer Schaltbereich verbleibt, um den eigentlichen Umschaltvorgang des Hydromotors 3 und somit die Geschwindigkeitserhöhung bis hin zur Endgeschwindigkeit im zweiten Fahrbereich herbeizuführen.

## Patentansprüche

1. Lastschaltgetriebe, insbesondere für mobile Bau- und Arbeitsmaschinen, mit mindestens zwei über mindestens eine Pumpe (1) antreibbare, eingangswellenseitig jeweils mit mindestens einer Zahnradpaarung (4,5) in Wirkverbindung stehende Hydromotore (2,3), die für einen ersten Fahrbereich der Bau- und Arbeitsmaschine zur Addition der Drehmomente beider Hydromotore (2,3) über eine Kupplung (8) miteinander verbunden sind, wobei für einen sich an den ersten Fahrbereich der Bau- und Arbeitsmaschine anschließenden Fahrbereich zumindest einer der Hydromotore (2) über die Kupplung (8) von der Antriebswelle des anderen Hydromotors (3) entkuppelbar ist, dadurch gekennzeichnet, daß das Lastschaltgetriebe mit mindestens einem mindestens eine Abtriebswelle (21) beinhaltenden Planetengetriebe (10) versehen ist, dessen Hohlrad (22) über mindestens eine Bremse (20) festsetzbar ist, und für den sich an den ersten Fahrbereich der Bau- und Arbeitsmaschine anschließenden Fahrbereich zumindest einer der Hydromotore (3) über eine weitere Kupplung (18) im Bereich seiner Antriebswelle (7) zur mechanischen Addition der Drehzahlen beider Hydromotore (2,3) entsprechend dem Überlagerungsprinzip kraftschlüssig auf das Hohlrad (22) des Planetengetriebes (10) kuppelbar ist.

2. Lastschaltgetriebe nach Anspruch 1, dadurch gekennzeichnet, daß im zeitlichen Verlauf der Zuschaltung der Kupplung (18) des Hydromotors (3) die Bremse (20) lösbar ist.

3. Lastschaltgetriebe nach den Ansprüchen 1 und 2, dadurch gekennzeichnet, daß die Bremse (20) als insbesondere nasse Lamellenbremse ausgebildet ist.

4. Lastschaltgetriebe nach den Ansprüchen 1 bis 3, gekennzeichnet durch ein auf der Antriebswelle (7) des umschaltbaren Hydromotors (3), angeordnetes, mit dem Hohlrad (22) des Planetengetriebes (10) im Eingriff stehendes Zahnrad (19).

5. Lastschaltgetriebe nach den Ansprüchen 1 bis 4, dadurch gekennzeichnet, daß die Hydromotore (2,3) jeweils durch einen geschlossenen hydrostatischen Kreislauf mit Druckmedium beaufschlagbar sind.

6. Lastschaltgetriebe nach den Ansprüchen 1 bis 4, gekennzeichnet durch einen gemeinsamen hydrostatischen Kreislauf für die Hydromotore (2,3).

7. Lastschaltgetriebe nach den Ansprüchen 1 bis 4, dadurch gekennzeichnet, daß der Hydromotor (2) durch einen geschlossenen (14) und der Hydromotor (3) durch einen offenen hydrostatischen Kreislauf (16) mit Druckmedium beaufschlagbar ist.

8. Lastschaltgetriebe nach Anspruch 7, dadurch gekennzeichnet, daß die für die Arbeitshydraulik der Bau- und Arbeitsmaschine zum Einsatz gelangende Arbeitspumpe (13) den Hydromotor (3) mit Druckmedium versorgt.

9. Lastschaltgetriebe nach den Ansprüchen 7 und 8, dadurch gekennzeichnet, daß der Hydromotor (3) ein Konstantmotor ist.

10. Lastschaltgetriebe nach den Ansprüchen 7 bis 9, dadurch gekennzeichnet, daß der Hydromotor (2) ein Verstellmotor ist.

11. Lastschaltgetriebe nach Anspruch 5, dadurch gekennzeichnet, daß die Hydromotore (2,3) als Verstellmotore ausgebildet sind.

12. Lastschaltgetriebe nach den Ansprüchen 7 bis 10, dadurch gekennzeichnet, daß der aus mehreren Einzelventilen gebildete für die Arbeitshydraulik vorgesehene Steuerblock (15) bei Bedarf um eine Funktionseinheit erweitert wird, die den Konstantmotor (3) stufenlos ansteuert.

13. Lastschaltgetriebe nach den Ansprüchen 1 bis 12, dadurch gekennzeichnet, daß die Bremse (20) hydraulisch betätigbar ist.

14. Lastschaltgetriebe nach den Ansprüchen 1 bis 13, dadurch gekennzeichnet, daß die Kupplungen (17,18) hydraulisch betätigbar sind.

15. Lastschaltgetriebe nach einem oder mehreren der Ansprüche 1 bis 14, dadurch gekennzeichnet, daß bei Hydromotore (2,3) gleicher Grenzdrehzahl das Übersetzungsverhältnis ihrer beiden Antriebswellen (4,7) i= 1 ist.

16. Lastschaltgetriebe nach einem oder mehreren der Ansprüche 1 bis 14, dadurch gekennzeichnet, daß bei höherer Grenzdrehzahl des einen (2 bzw. 3) gegenüber dem anderen Hydromotor (3 bzw. 2) das Übersetzungsverhältnis ihrer Antriebswellen (4,7) so gewählt ist, daß beide Hydromotore (2,3) gleichzeitig ihre Grenzdrehzahl erreichen.

17. Lastschaltgetriebe nach einem oder mehreren der Ansprüche 1 bis 14, dadurch gekennzeichnet, daß die Übersetzung zwischen der Antriebswelle (7) des umschaltbaren Hydromotors (3) und der Antriebswelle (4) des nicht umschaltbaren Hydromotors (2) so gewählt ist, daß der Hydromotor (3) seine Grenzdrehzahl vor dem Hydromotor (2) erreicht.

18. Lastschaltgetriebe nach einem der Ansprüche 15 bis 17, dadurch gekennzeichnet, daß das Übersetzungsverhältnis zwischen der Antriebswelle (7) des umschaltbaren Hydromotors (3) und der Abtriebswelle (21) des Planetengetriebes (10) kleiner ist, als die Gesamtübersetzung der Antriebswelle (4) des nicht umschaltbaren Hydromotors (2) zur Abtriebswelle (21) des Planetengetriebes (10).

19. Verfahren zur Steuerung eines Lastschaltgetriebes mit mindestens zwei über mindestens eine Pumpe (12,13) antreibbare, eingangswellenseitig jeweils mit mindestens einer Zahnradpaarung (5/6, 8/9) in Wirkverbindung stehende Hydromotore (2,3), die über eine Kupplung (17) miteinander verbunden sind und mindestens einem, mindestens eine Abtriebswelle (21) beinhaltenden Planetengetriebe (10), dessen Hohlrad (22) über mindestens eine Bremse (20) festsetzbar ist, indem die Hydromotore (2,3) in einem unteren Geschwindigkeitsbereich drehmomentaddierend zusammengeschaltet werden und einer der Hydromotore (3) dergestalt über eine weitere Kupplung (18) umgeschaltet wird daß die Hydromotore (2,3) in einem oberen Geschwindigkeitsbereich drehzahladdierend betrieben werden.

20. Verfahren nach Anspruch 19, gekennzeichnet durch die Kombination folgender Merkmale:
- im Stillstand der Bau- und Arbeitsmaschine werden bei Verwendung zweier Pumpen (12,13) die Pumpen (12,13) ein- und die Hydromotore (2,3) voll ausgeschwenkt, wobei der Hydromotor (3) hydraulisch auf Umlauf geschaltet ist; die die Zahnradpaarungen (5/6, 8/9) verbindende Kupplung (17) und die Bremse (20) sind aktiviert, während die Kupplung (18) inaktiv ist,
- zum Anfahren der Bau- und Arbeitsmaschine in einem ersten Fahrbereich wird zumindest eine der Pumpen (12,13) stetig ausgelenkt und der zugehörige Hydromotor (2,3) beschleunigt, wobei in Abhängigkeit vorgegebener Parameter und Beschleunigung nur mit dem Hydromotor (2) der Hydromotor (3) über die zugehörige Pumpe (13) zugeschaltet wird,
- bei einem Fahrbetrieb mit beiden Hydromotore (2,3) werden die Drehmomente der Hydromotore (2,3) über die miteinander gekuppelten Zahnradpaarungen (5/6, 8/9) addiert,
- die Bau- und Arbeitsmaschine wird solange mit beiden Hydromotore (2,3) beschleunigt, bis entweder
- das notwendige Antriebsdrehmoment nur von beiden Hydromotore (2,3) gemeinsam aufgebracht werden kann,
- eine vorgebbare anteilige Maximalgeschwindigkeit erreicht ist, oder
- durch entsprechendes Verschwenken der Hydromotore (2,3) und/oder der Pumpen (12,13) eine Optimierung des Wirkungsgrades herbeigeführt werden kann, oder
- der umschaltbare Hydromotor (3) wird mit dem Erreichen entweder
- der vorgebbaren anteiligen Maximalgeschwindigkeit, oder
- des Endes der Wirkungsgradoptimierung, oder
- der Geschwindigkeitsphase, bei welcher ein Hydromotor (2 oder 3) das maximal erforderliche Drehmoment aufbringen kann
auf Umlauf geschaltet
- die aktivierte Kupplung (17) wird desaktiviert und die nicht aktive Kupplung (18) aktiviert, wobei der auf Umlauf geschaltete Hydromotor (3) für einen weiteren Fahrbereich mit dem Hohlrad (22) des Planetengetriebes (10) gekuppelt wird,
- die Bremse (20) wird gelöst und der Hydromotor (3) wird über die zugehörige Pumpe (13) und den Steuerblock (15) solange beschleunigt, bis durch Addition der Drehzahlen der Bereich der maximalen Abtriebsdrehzahl des nunmehr als Überlagerungsgetriebe arbeitenden Planetengetriebes (10) erreicht ist,
- zum Abbremsen der Bau- und Arbeitsmaschine, d.h. zum Umschalten des zweiten in den ersten Fahrbereich, werden die einzelnen vorstehend beschriebenen Schritte und Vorgänge in umgekehrter Reihenfolge durchlaufen.

21. Verfahren nach Anspruch 19, gekennzeichnet durch die Kombination folgender Merkmale:
- im Stillstand der Bau- und Arbeitsmaschine werden bei Verwendung zweier Pumpen (12,13) die Pumpen (12,13) ein- und die Hydromotore (2,3) voll ausgeschwenkt; die die Zahnradpaarungen (5/6, 8/9) verbindende Kupplung (17) und die Bremse (20) sind aktiviert, während die Kupplung (18) inaktiv ist,
- zum Anfahren der Bau- und Arbeitsmaschine in einem ersten Fahrbereich wird zumindest eine der Pumpen (12,13) stetig ausgelenkt und der zugehörige Hydromotor (2,3) beschleunigt, wobei in Abhängigkeit vorgegebener Parameter und Beschleunigung nur mit dem hydromotor (2) der Hydromotor (3) über die zugehörige Pumpe (13) zugeschaltet wird,
- bei einem Fahrbetrieb mit beiden Hydromotore (2,3) werden die Drehmomente der Hydromotore (2,3) über die miteinander gekuppelten Zahnradpaarungen (5/6, 8/9) addiert,
- die Bau- und Arbeitsmaschine wird solange mit beiden Hydromotore (2,3) beschleunigt, bis entweder
- das notwendige Antriebsdrehmoment nur von beiden Hydromotore (2,3) gemeinsam aufgebracht-werden kann,
- eine vorgebbare anteilige Maximalgeschwindigkeit erreicht ist, oder
- durch entsprechendes Verschwenken der Hydromotore (2,3) und/oder der Pumpen (12,13) eine Optimierung des Wirkungsgrades herbeigeführt werden kann, oder
- der umschaltbare Hydromotor (3) wird mit dem Erreichen entweder
- der vorgebbaren anteiligen Maximalgeschwindigkeit, oder
- des Endes der Wirkungsgradoptimierung oder
- der Geschwindigkeitsphase, bei welcher ein Hydromotor (2 oder 3) das maximal erforderliche Drehmoment aufbringen kann
auf Umlauf geschaltet
- die aktivierte Kupplung (17) wird desaktiviert und die nicht aktive Kupplung (18) aktiviert, wobei der auf Umlauf geschaltete Hydromotor (3) für einen weiteren Fahrbereich mit dem Hohlrad (22) des Planetengetriebes (10) gekuppelt wird,
- die Bremse (20) wird gelöst und der Hydromotor (3) wird über die zugehörige Pumpe (13) solange beschleunigt, bis durch Addition der Drehzahlen der Bereich der maximalen Abtriebsdrehzahl des nunmehr als Überlagerungsgetriebe arbeitenden Planetengetriebes (10) erreicht ist,
- zum Abbremsen der Bau- und Arbeitsmaschine, d.h. zum Umschalten des zweiten in den ersten Fahrbereich, werden die einzelnen vorstehend beschriebenen Schritte und Vorgänge in umgekehrter Reihenfolge durchlaufen.

22. Verfahren nach einem oder mehreren der Ansprüche 19 bis 21, dadurch gekennzeichnet, daß die Geschwindigkeit der Bau- und Arbeitsmaschine in einem Bereich geringen Zugkraftbedarfes mit lediglich einem Hydromotor (2) aufgebracht wird.

23. Verfahren nach einem oder mehreren der Ansprüche 19 bis 21, dadurch gekennzeichnet, daß die Geschwindigkeit der Bau- und Arbeitsmaschine in einem Bereich geringerer Fahrantriebsleistung des Antriebsmotors (11) lediglich mit dem Hydromotor (2) aufgebracht wird.

24. Verfahren nach einem oder mehreren der Ansprüche 19 bis 23, dadurch gekennzeichnet, daß der umschaltbare Hydromotor (3) vor Erreichen der Maximaldrehzahl des Hydromotors (2) und vor dem Lösen der Bremse (20) sowie nach dem Aktivieren der Kupplung (18) mit Druck beaufschlagt wird.

25. Verfahren nach einem oder mehreren der Ansprüche 19 bis 24, dadurch gekennzeichnet, daß in der Phase des Abbremsens der Bau- und Arbeitsmaschine die im offenen Kreislauf betriebenen Hydromotore (2,3) so geschaltet werden, daß die Bremsenergie in mindestens einen nachgeschalteten Hydrospeicher eingebracht wird.

26. Verfahren nach Anspruch 25, dadurch gekennzeichnet, daß die gespeicherte Energie dem Fahrantrieb und/oder den Betätigungseinrichtungen der Arbeitswerkzeuge der Bau- und Arbeitsmaschine zur Verfügung gestellt wird.

## Claims

1. Power-shift transmission, especially for mobile construction and processing machines, having at least two hydraulic motors (2,3), which can be driven via at least one pump (1), are each operatively connected at the input shaft side to at least one pair of gear wheels (5, 6) and are connected to each other via a clutch (8) for a first driving range of the construction and processing machine, for the purpose of adding the torques from the two hydraulic motors (2, 3), it being possible for at least one of the hydraulic motors (2) to be decoupled, via the clutch (8), from the drive shaft of the other hydraulic motor (3) for a driving range that adjoins the first driving range of the construction and processing machine, characterized in that the power-shift transmission is provided with at least one epicyclic gear mechanism (10) which contains at least one output shaft (21) and whose internal ring gear (22) can be fixed by at least one brake (20) and, for the driving range that adjoins the first driving range of the construction and processing machine, at least one of the hydraulic motors (3) can be coupled, via a further clutch (18) in the region of its drive shaft (7), to the internal ring gear (22) of the epicyclic gear mechanism (10) so as to transmit power in accordance with the controlled-speed epicyclic principle, for the purpose of mechanically adding the torques from the two hydraulic motors (2,3).

2. Power-shift transmission according to Claim 1, characterized in that, during the course of engaging the clutch (18) of the hydraulic motor (3), the brake (20) may be released.

3. Power-shift transmission according to Claims 1 and 2, characterized in that the brake (20) is designed, in particular, as a wet multi-plate brake.

4. Power-shift transmission according to Claims 1 to 3, characterized by a gear wheel (19) which is arranged on the drive shaft (7) of the switchable hydraulic motor (3) and engages in the internal ring gear (22) of the epicyclic gear mechanism (10).

5. Power-shift transmission according to Claims 1 to 4, characterized in that the hydraulic motors (2, 3) can each have pressure medium applied to them via a closed hydrostatic circuit.

6. Power-shift transmission according to Claims 1 to 4, characterized by a common hydrostatic circuit for the hydraulic motors (2, 3).

7. Power-shift transmission according to Claims 1 to 4, characterized in that the hydraulic motor (2) can have pressure medium applied to it via a closed circuit (14), and the hydraulic motor (3) can have pressure medium applied to it via an open hydrostatic circuit (16).

8. Power-shift transmission according to Claim 7, characterized in that the operating pump (13) that is used for the operating hydraulics of the construction and processing machine supplies the hydraulic motor (3) with pressure medium.

9. Power-shift transmission according to Claims 7 and 8, characterized in that the hydraulic motor (3) is a constant absorbability motor.

10. Power-shift transmission according to Claims 7 to 9, characterized in that the hydraulic motor (2) is a variable absorbability motor.

11. Power-shift transmission according to Claim 5, characterized in that the hydraulic motors (2, 3) are designed as variable absorbability motors.

12. Power-shift transmission according to Claims 7 to 10, characterized in that the control block (15), which is provided for the operating hydraulics and is formed from a plurality of individual valves, is, if required, expanded by a functional unit that drives the constant absorbability motor (3) steplessly.

13. Power-shift transmission according to Claims 1 to 12, characterized in that the brake (20) can be actuated hydraulically.

14. Power-shift transmission according to Claims 1 to 13, characterized in that the clutches (17, 18) can be actuated hydraulically.

15. Power-shift transmission according to one or more of Claims 1 to 14, characterized in that, in the case of hydraulic motors (2, 3) with equal limiting speeds, the transmission ratio of their two drive shafts (4, 7) is i = 1.

16. Power-shift transmission according to one or more of Claims 1 to 14, characterized in that, in the case where one hydraulic motor (2 or 3) has a higher limiting speed than the other (3 or 2), the transmission ratio of their drive shafts (4, 7) is selected such that both hydraulic motors (2, 3) reach their limiting speeds at the same time.

17. Power-shift transmission according to one or more of Claims 1 to 14, characterized in that the transmission ratio between the drive shaft (7) of the switchable hydraulic motor (3) and the drive shaft (4) of the non-switchable hydraulic motor (2) is selected such that the hydraulic motor (3) reaches its limiting speed before the hydraulic motor (2).

18. Power-shift transmission according to one of Claims 15 to 17, characterized in that the transmission ratio between the drive shaft (7) of the switchable hydraulic motor (3) and the output shaft (21) of the epicyclic gear mechanism (10) is smaller than the overall ratio of the drive shaft (4) of the non-switchable hydraulic motor (2) to the output shaft (21) of the epicyclic gear mechanism (10).

19. Method of controlling a power-shift transmission having at least two hydraulic motors (2, 3), which can be driven via at least one pump (12, 13), are each operatively connected at the input shaft side to at least one pair of gear wheels (5/6, 8/9) and are connected to each other via a clutch (17), and having at least one epicyclic gear mechanism (10) which contains at least one output shaft (21) and whose internal ring gear (22) can be fixed by at least one brake (20), in that the hydraulic motors (2, 3) are connected together so that their torques are added in a lower speed range, and one of the hydraulic motors (3) is switched over via a further clutch (18) in such a way that the hydraulic motors (2, 3) are operated so that their speeds are added in an upper speed range.

20. Method according to Claim 19, characterized by the combination of the following features:
- when the construction and processing machine is stationary, if two pumps (12, 13) are used, the pumps (12, 13) are set to minimum pitch and the hydraulic motors (2, 3) to maximum pitch, the hydraulic motor (3) being switched hydraulically to rotate; the clutch (17) connecting the pairs of gear wheels (5/6, 8/9) and the brake (20) are activated, whereas the clutch (18) is inactive,
- in order to start up the construction and processing machine in a first driving range, at least one of the pumps (12, 13) has its pitch increased continuously and the associated hydraulic motor (2, 3) is accelerated, the hydraulic motor (3) being connected via the associated pump (13) as a function of predefined parameters and acceleration using only the hydraulic motor (2),
- during driving operation using both hydraulic motors (2, 3), the torques of the hydraulic motors (2, 3) are added via the intercoupled pairs of gear wheels (5/6, 8/9),
- the construction and processing machine is accelerated using both hydraulic motors (2, 3) until either
- the necessary drive torque can be applied only by the two hydraulic motors (2, 3) together,
- a predefinable proportional maximum speed is reached, or
- optimization of the efficiency can be brought about by means of appropriate changes to the pitch of the hydraulic motors (2, 3) and/or the pumps (12, 13), or
- the switchable hydraulic motor (3) is switched to rotate when one of the following is reached:
- the predefinable proportional maximum speed, or
- the end of the efficiency optimization, or
- the speed phase in which one hydraulic motor (2 or 3) can apply the maximum required torque
- the activated clutch (17) is deactivated and the inactive clutch (18) is activated, the hydraulic motor (3) that is switched to rotate being coupled to the internal ring gear (22) of the epicyclic gear mechanism (10) for a further driving range,
- the brake (20) is released and the hydraulic motor (3) is accelerated, via the associated pump (13) and the control block (15), until, as a result of adding their speeds, the region of the maximum output speed of the epicyclic gear mechanism (10), which is now operating as a controllable-speed epicyclic gear mechanism, is reached,
- in order to brake the construction and processing machine, that is to say to change over from the second into the first driving range, the individual steps and operations described above are run through in the reverse sequence.

21. Method according to Claim 19, characterized by the combination of the following features:
- when the construction and processing machine is stationary, if two pumps (12, 13) are used, the pumps (12, 13) are set to minimum pitch and the hydraulic motors (2, 3) to maximum pitch; the clutch (17) connecting the pairs of gear wheels (5/6, 8/9) and the brake (20) are activated, whereas the clutch (18) is inactive,
- in order to start up the construction and processing machine in a first driving range, at least one of the pumps (12, 13) has its pitch increased continuously and the associated hydraulic motor (2, 3) is accelerated, the hydraulic motor (3) being connected via the associated pump (13) as a function of predefined parameters and acceleration using only the hydraulic motor (2),
- during driving operation using both hydraulic motors (2, 3), the torques of the hydraulic motors (2, 3) are added via the intercoupled pairs of gear wheels (5/6, 8/9),
- the construction and processing machine is accelerated using both hydraulic motors (2, 3) until either
- the necessary drive torque can be applied only by the two hydraulic motors (2, 3) together,
- a predefinable proportional maximum speed is reached, or
- optimization of the efficiency can be brought about by means of appropriate changes to the pitch of the hydraulic motors (2, 3) and/or the pumps (12, 13), or
- the switchable hydraulic motor (3) is switched to rotate when one of the following is reached:
- the predefinable proportional maximum speed, or
- the end of the efficiency optimization, or
- the speed phase in which one hydraulic motor (2 or 3) can apply the maximum required torque
- the activated clutch (17) is deactivated and the inactive clutch (18) is activated, the hydraulic motor (3) that is switched to rotate being coupled to the internal ring gear (22) of the epicyclic gear mechanism (10) for a further driving range,
- the brake (20) is released and the hydraulic motor (3) is accelerated, via the associated pump (13), until, as a result of adding their speeds, the region of the maximum output speed of the epicyclic gear mechanism (10), which is now operating as a controllable-speed epicyclic gear mechanism, is reached,
- in order to brake the construction and processing machine, that is to say to change over from the second into the first driving range, the individual steps and operations described above are run through in the reverse sequence.

22. Method according to one or more of Claims 19, to 21, characterized in that, in a region of low required pulling force, the speed of the construction and processing machine is achieved using only one hydraulic motor (2).

23. Method according to one or more of Claims 19 to 21, characterized in that, in a region of low driving output power from the drive motor (11), the speed of the construction and processing machine is achieved using only the hydraulic motor (2).

24. Method according to one or more of Claims 19 to 23, characterized in that the switchable hydraulic motor (3) has pressure applied to it before the hydraulic motor (2) reaches maximum speed and before the brake (20) is released, as well as after the clutch (18) is activated.

25. Method according to one or more of Claims 19 to 24, characterized in that, in the phase of braking the construction and processing machine, the hydraulic motors (2, 3) that are operated in the open circuit are switched such that the braking energy is introduced into at least one hydraulic store connected downstream.

26. Method according to Claim 25, characterized in that the stored energy is made available to the drive and/or the actuating devices of the processing tools of the construction and processing machine.

## Revendications

1. Boîte de vitesses commandée en charge, notamment pour machines mobiles de chantier et de travail, comprenant au moins deux moteurs hydrauliques (2, 3) susceptibles d'être commandés par au moins une pompe (1), connectés en fonctionnement côté arbre d'entrée chacun avec au moins une paire de roues d'engrenage (4, 5), qui sont interconnectés par un embrayage (8) afin d'additionner les couples des deux moteurs hydrauliques (2, 3) dans un premier domaine de conduite de la machine de chantier et de travail, au moins l'un des moteurs hydrauliques (2) pouvant être désaccouplé, par le biais de l'embrayage (8), de l'arbre d'entraînement de l'autre moteur hydraulique (3), pour un domaine de conduite suivant le premier domaine de conduite de la machine de chantier et de travail, caractérisée en ce que la boîte de vitesses commandée en charge est pourvue d'au moins un engrenage planétaire (10) qui contient au moins un arbre de sortie (21), et dont la couronne (22) peut être bloquée par au moins un frein (20), et pour le domaine de conduite suivant le premier domaine de conduite de la machine de chantier et de travail, au moins l'un des moteurs hydrauliques (3) peut être couplé par friction, par l'intermédiaire d'un embrayage supplémentaire (18), dans la zone de son arbre d'entraînement (7), à la couronne (22) de l'engrenage planétaire (10), afin d'additionner mécaniquement les régimes des deux moteurs hydrauliques (2, 3) selon le principe de superposition.

2. Boîte de vitesses commandée en charge selon la revendication 1, caractérisée en ce qu'au cours de l'engagement de l'embrayage (18) du moteur hydraulique (3), le frein (20) peut être desserré.

3. Boîte de vitesses commandée en charge selon les revendications 1 et 2, caractérisée en ce que le frein (20) est conçu en particulier en tant que frein à disques multiples humide.

4. Boîte de vitesses commandée en charge selon les revendications 1 à 3, caractérisée par une roue d'engrenage (19) disposée sur l'arbre d'entraînement (7) du moteur hydraulique (3) commutable, s'engrenant avec la couronne (22) de l'engrenage planétaire (10).

5. Boîte de vitesses commandée en charge selon les revendications 1 à 4, caractérisée en ce que les moteurs hydrauliques (2, 3) peuvent être alimentés chacun en fluide de pression par un circuit hydrostatique fermé.

6. Boîte de vitesses commandée en charge selon les revendications 1 à 4, caractérisée par un circuit hydrostatique commun pour les moteurs hydrauliques (2, 3).

7. Boîte de vitesses commandée en charge selon les revendications 1 à 4, caractérisée en ce que le moteur hydraulique (2) peut être alimenté en fluide de pression par un circuit hydrostatique fermé (14) et le moteur hydraulique (3) par un circuit hydrostatique ouvert (16).

8. Boîte de vitesses commandée en charge selon la revendication 7, caractérisée en ce que la pompe de travail (13) servant pour l'installation hydraulique de travail de la machine de chantier et de travail alimente le moteur hydraulique (3) en fluide de pression.

9. Boîte de vitesses commandée en charge selon les revendications 7 et 8, caractérisée en ce que le moteur hydraulique (3) est un moteur à cylindrée constante.

10. Boîte de vitesses commandée en charge selon les revendications 7 à 9, caractérisée en ce que le moteur hydraulique (2) est un moteur à cylindrée variable.

11. Boîte de vitesses commandée en charge selon la revendication 5, caractérisée en ce que les moteurs hydrauliques (2, 3) sont conçus en tant que moteurs à cylindrée variable.

12. Boîte de vitesses commandée en charge selon les revendications 7 à 10, caractérisée en ce que le bloc de commande (15) formé de plusieurs soupapes individuelles et prévu pour l'installation hydraulique de travail est, au besoin, complété par un ensemble fonctionnel qui commande en continu le moteur à cylindrée constante (3).

13. Boîte de vitesses commandée en charge selon les revendications 1 à 12, caractérisée en ce que le frein (20) peut être actionné hydrauliquement.

14. Boîte de vitesses commandée en charge selon les revendications 1 à 13, caractérisée en ce que en ce que les embrayages (17, 18) peuvent être actionnés hydrauliquement.

15. Boîte de vitesses commandée en charge selon l'une ou plusieurs des revendications 1 à 14, caractérisée en ce que pour des moteurs hydrauliques (2, 3) de même régime limite, le rapport de transmission de leurs deux arbres d'entraînement (4, 7) est de i = 1.

16. Boîte de vitesses commandée en charge selon l'une ou plusieurs des revendications 1 à 14, caractérisée en ce que pour un régime limite supérieur de l'un (2 ou 3) par rapport à l'autre (3 ou 2) des moteurs hydrauliques, le rapport de transmission de leurs arbres d'entraînement (4, 7) est choisi tel que les deux moteurs hydrauliques (2, 3) atteignent simultanément leur régime limite.

17. Boîte de vitesses commandée en charge selon l'une ou plusieurs des revendications 1 à 14, caractérisée en ce que la transmission entre l'arbre d'entraînement (7) du moteur hydraulique commutable (3) et l'arbre d'entraînement (4) du moteur hydraulique non commutable (2) est choisie de telle sorte que le moteur hydraulique (3) atteigne son régime limite avant le moteur hydraulique (2).

18. Boîte de vitesses commandée en charge selon l'une quelconque des revendications 15 à 17, caractérisée en ce que le rapport de transmission entre l'arbre d'entraînement (7) du moteur hydraulique commutable (3) et l'arbre de sortie (21) de l'engrenage planétaire (10) est plus petit que le rapport de transmission total de l'arbre d'entraînement (4) du moteur hydraulique non commutable (2) à l'arbre de sortie (21) de l'engrenage planétaire (10).

19. Procédé de commande d'une boîte de vitesses commandée en charge ayant au moins deux moteurs hydrauliques (2, 3) en relation de travail susceptibles d'être commandés par au moins une pompe (12, 13), connectés en fonctionnement côté arbre d'entrée chacun avec au moins une paire de roues d'engrenage (5/6, 8/9), qui sont interconnectés par un embrayage (17) et ayant au moins un engrenage planétaire (10) contenant au moins un arbre de sortie (21), et dont la couronne (22) peut être bloquée par au moins un frein (20), les moteurs hydrauliques (2, 3) étant interconnectés de manière à additionner leurs couples dans un domaine de vitesse inférieur, et l'un des moteurs hydrauliques (3) étant commuté par l'intermédiaire d'un embrayage supplémentaire (18), de telle sorte que les moteurs hydrauliques (2, 3) soient entraînés dans un domaine de vitesse supérieur en additionnant leurs régimes.

20. Procédé selon la revendication 19, caractérisé par la combinaison des caractéristiques suivantes:
- à l'état stationnaire de la machine de chantier et de travail, lorsqu'on utilise deux pompes (12, 13), les pompes (12, 13) sont ajustées au pas minimum et les moteurs hydrauliques (2, 3) sont ajustés au pas maximum, le moteur hydraulique (3) étant commuté hydrauliquement de manière à tourner; l'embrayage (17) reliant les paires de roues d'engrenage (5/6, 8/9) et le frein (20) sont activés, tandis que l'embrayage (18) est inactif,
- pour mettre en marche la machine de chantier et de travail dans un premier domaine de conduite, le pas d'au moins l'une des pompes (12, 13) est augmenté en continu et le moteur hydraulique correspondant (2, 3) est accéléré, tandis qu'en fonction de paramètres prédéfinis et de l'accélération uniquement avec le moteur hydraulique (2), le moteur hydraulique (3) est connecté par l'intermédiaire de la pompe correspondante (13),
- dans le cas d'un fonctionnement de conduite avec les deux moteurs hydrauliques (2, 3), les couples des moteurs hydrauliques (2, 3) sont additionnés par le biais des paires de roues d'engrenage (5/6, 8/9) accouplées l'une à l'autre,
- la machine de chantier et de travail est accélérée avec les deux moteurs hydrauliques (2, 3) jusqu'à ce que soit
- le couple d'entraînement nécessaire puisse être obtenu uniquement avec les deux moteurs hydrauliques (2, 3) en commun,
- une vitesse maximale prédéfinissable proportionnelle soit atteinte, soit
- on puisse obtenir, par modification correspondante du pas des hydromoteurs (2, 3) et/ou des pompes (12/13) une optimisation de l'efficacité, soit
- le moteur hydraulique (3) commutable est commuté pour tourner lors de l'obtention, soit
- de la vitesse maximale prédéfinissable proportionnelle, soit
- de la fin de l'optimisation de l'efficacité, soit
- de la phase de vitesse, dans laquelle un moteur hydraulique (2 ou 3) peut produire le couple maximum nécessaire,
- l'embrayage (17) activé est désactivé et l'embrayage (18) non activé est activé, le moteur hydraulique (3) commuté pour tourner pour un autre domaine de conduite étant accouplé à la couronne (22) de l'engrenage planétaire (10),
- le frein (20) est desserré et le moteur hydraulique (3) est accéléré par la pompe correspondante (13) et le bloc de commande (15) jusqu'à ce que, par l'addition des régimes, le domaine du régime de travail maximum de l'engrenage planétaire (10) fonctionnant maintenant en tant qu'engrenage de superposition soit atteint,
- pour freiner la machine de chantier et de travail, c'est-à-dire pour rétrograder du deuxième domaine de conduite dans le premier domaine, les étapes et les processus individuels décrits ci-dessus sont effectués dans la séquence inverse.

21. Procédé selon la revendication 19, caractérisé par la combinaison des caractéristiques suivantes:
- à l'état stationnaire de la machine de chantier et de travail, lorsqu'on utilise deux pompes (12, 13), les pompes (12, 13) sont ajustées au pas minimum et les moteurs hydrauliques (2, 3) sont ajustés au pas maximum, l'embrayage (17) reliant les paires de roues d'engrenage (5/6, 8/9) et le frein (20) sont activés, tandis que l'embrayage (18) est inactif,
- pour mettre en marche la machine de chantier et de travail dans un premier domaine de conduite, le pas d'au moins l'une des pompes (12, 13) est augmenté en continu et le moteur hydraulique correspondant (2, 3) est accéléré, tandis qu'en fonction de paramètres prédéfinis et de l'accélération uniquement avec le moteur hydraulique (2), le moteur hydraulique (3) est connecté par le biais de la pompe correspondante (13),
- dans le cas d'un fonctionnement de conduite avec les deux moteurs hydrauliques (2, 3), les couples des moteurs hydrauliques (2, 3) sont additionnés par le biais des paires de roues d'engrenage (5/6, 8/9) accouplées l'une à l'autre,
- la machine de chantier et de travail est accélérée avec les deux moteurs hydrauliques (2, 3) jusqu'à ce que soit
- le couple d'entraînement nécessaire puisse être obtenu uniquement avec les deux moteurs hydrauliques (2, 3) en commun,
- une vitesse maximale prédéfinissable proportionnelle soit atteinte, soit
- on puisse obtenir, par modification correspondante du pas des hydromoteurs (2, 3) et/ou des pompes (12/13) une optimisation de l'efficacité, soit
- le moteur hydraulique (3) commutable est commuté pour tourner lors de l'obtention, soit
- de la vitesse maximale prédéfinissable proportionnelle, soit
- de la fin de l'optimisation de l'efficacité, soit
- de la phase de vitesse, dans laquelle un moteur hydraulique (2 ou 3) peut produire le couple maximum nécessaire,
- l'embrayage (17) activé est désactivé et l'embrayage (18) non activé est activé,le moteur hydraulique (3) connecté pour tourner pour un autre domaine de conduite étant accouplé à la couronne (22) de l'engrenage planétaire (10),
- le frein (20) est desserré et le moteur hydraulique (3) est accéléré par la pompe correspondante (13) jusqu'à ce que, par l'addition des régimes, le domaine du régime de travail maximum de l'engrenage planétaire (10) fonctionnant maintenant en tant qu'engrenage de superposition soit atteint,
- pour freiner la machine de chantier et de travail, c'est-à-dire pour rétrograder du deuxième domaine de conduite dans le premier domaine, les étapes et les processus individuels décrits ci-dessus sont effectués dans la séquence inverse.

22. Procédé selon l'une ou plusieurs des revendications 19 à 21, caractérisé en ce que la vitesse de la machine de chantier et de travail est amenée dans un domaine de faible besoin en force de traction avec uniquement un moteur hydraulique (2).

23. Procédé selon l'une ou plusieurs des revendications 19 à 21, caractérisé en ce que la vitesse de la machine de chantier et de travail est amenée dans un domaine de puissance d'entraînement plus faible du moteur d'entraînement (11) uniquement avec le moteur hydraulique (2).

24. Procédé selon l'une ou plusieurs des revendications 19 à 23, caractérisé en ce que le moteur hydraulique commutable (3) est alimenté en pression avant d'atteindre le régime maximum du moteur hydraulique (2) et avant que le frein (20) ne soit desserré ainsi qu'après l'engagement de l'embrayage (18).

25. Procédé selon l'une quelconque ou plusieurs des revendications 19 à 24, caractérisé en ce que dans la phase de freinage de la machine de chantier et de travail les moteurs hydrauliques (2, 3) fonctionnant dans le circuit ouvert sont commutés de telle sorte que l'énergie de freinage soit introduite dans au moins un accumulateur hydraulique connecté en aval.

26. Procédé selon la revendication 25, caractérisé en ce que l'énergie accumulée est mise à disposition pour l'entraînement de conduite et/ou les dispositifs d'actionnement des outils de travail de la machine de chantier et de travail.
